# EUROPÄISCHE PATENTSCHRIFT

(11) **EP 1 130 291 B1**
(45) Veröffentlichungstag und Bekanntmachung des Hinweises auf die Patenterteilung: **26.06.2002**
(21) Anmeldenummer: 00101199.8
(22) Anmeldetag: 22.01.2000
(51) Int. Cl.: F16H 61/04, F16H 3/093, B60K 41/22

(54) **Getriebekonzept für ein 6-Gang-Vorgelege-Wechselgetriebe für Kraftfahrzeuge**
Concept for a 6-speed countershaft transmission for motor vehicles
Concept pour transmission à arbres intermédiaires pour véhicules automobiles

(43) Veröffentlichungstag der Anmeldung: 05.09.2001
(73) Patentinhaber: Ford Global Technologies, Inc., A subsidiary of Ford Motor Company, Dearborn, Michigan 48126 (US)
(72) Erfinder: Absenger, Marc, 42279 Wuppertal (DE); Eggert, Ulrich, 41751 Viersen (DE); Nett, Hans Peter, 53518 Adenau (DE)
(74) Vertreter: Messulam, Alec Moses

(56) Entgegenhaltungen:
- EP-A- 0 046 373
- EP-A- 0 150 583
- DE-A- 4 137 143

## Beschreibung

Die Erfindung bezieht sich auf ein Verfahren zum Schalten eines 6-Gang-Vorgelege-Wechselgetriebes für Kraftfahrzeuge, der im Oberbegriff des Patentanspruches 1 erläuterten Art.

Aus der gattungsgemäßen EP 0 046 373 A1 ist ein Getriebekonzept für ein 6-Gang-Vorgelege-Wechselgetriebe für Kraftfahrzeuge bekannt, bei dem zumindest einer Eingangswelle zwei parallel hierzu angeordnete Vorgelegewellen zugeordnet sind, die jeweils mit einem Ritzel versehen sind, das in Eingriff mit einem Endabtriebszahnrad steht. Auf der Eingangswelle sind hierbei im wesentlichen die Festräder der Zahnradpaare angeordnet, wohingegen die Losräder der Zahnradpaare paarweise unter Zwischenschaltung einer doppelten Synchronisiereinheit auf den Vorgelegewellen angeordnet sind, und die einer DoppelSynchronisiereinheit zugeordneten Losräder sowohl in einer Handschaltversion als auch in einer Lastschaltversion derart angeordnet sind, daß einem Gang jeweils der übernächste Gang benachbart angeordnet ist. Damit kann bei der Lastschaltversion, die eine doppelte Eingangswelle und eine Doppel-Eingangskupplung aufweist, eine zugkraftunterbrechungsfreie Schaltung vorgenommen werden.

Bei der bekannten Lastschaltversion wird durch die erforderliche doppelte Eingangswelle und der doppelten Eingangskupplung der Bauaufwand erhöht, wodurch ein solches Vorgelege-Wechselgetriebe in der Herstellung und Montage wesentlich teurer wird.

In der EP-A- 0 150 583 ist ein automatisiertes Handschaltgetriebe offenbart, das eine automatisch betätigte Kupplung und zwei automatisch betätigte Doppel-Synchronisiereinrichtungen aufweist. Dabei liegen, wie bereits oben beschrieben, benachbarte Gänge jeweils auf verschiedenen Synchronisiereinrichtungen, d.h. erster und dritter Gang auf der ersten und zweiter und vierter Gang auf der zweiten Doppel-Synchronisiereinrichtung. Zur Betätigung der Synchronisiereinrichtungen wird eine Steuerung durch einen mechanisch wirkenden Hebelmechanismus vorgeschlagen, welcher die Bewegung der beiden Synchronisiereinrichtungen koppelt. Ziel der Erfindung ist es, die zugkraftunterbrechungsfreie Zeit während eines Gangwechsels so gering wie möglich zu halten.

Zu Beginn des Gangwechsels öffnet die Betätigungseinrichtung die Kupplung langsam, wobei das Motordrehmoment am Anfang noch voll übertragen wird. Während die Kupplung langsam öffnet, wird die Schaltvorrichtung für den nächsthöheren bzw. niederen Gang betätigt. Wenn die Kupplung soweit geöffnet ist, daß das anliegende Motordrehmoment nicht mehr übertragen werden kann und das Getriebeeingangsdrehmoment entsprechend sinkt, wird das Motordrehmoment durch geeignete Regeleinrichtungen zurückgefahren. Sodann wird der eingelegte Gang ausgekuppelt. Sobald die Betätigungseinrichtung der Kupplung völlig zurückgefahren ist und die Kupplung voll offen ist, wird der nächsthöhere bzw. -niedere Gang eingekuppelt und die Kupplung schließt wieder.

Gegenüber einer Lastschaltversion tritt bei dieser automatisierten Handschaltversion eine völlige Unterbrechung der Zugkraft auf. Weiterhin muß durch die gekoppelte Betätigung der Synchronisiereinrichtungen zum Spiel- und Toleranzausgleich der beiden Synchronisiereinrichtungen jeweils ein gewisser Verfahrweg der Betätigungseinrichtung vorgesehen werden, damit die Schaltvorgänge ohne ungewollte Überschneidung durchgeführt werden. Dadurch wird jedoch die Schaltdauer und damit auch die zugkraftunterbrechungsfreie Zeit erhöht.

Die Aufgabe der Erfindung ist es, ein Verfahren zum Schalten eines 6-Gang-Vorgelege-Wechselgetriebes für Kraftfahrzeuge der im Oberbegriff des Patentanspruches 1 erläuterten Art derart zu verbessern, daß eine automatisierte Handschaltversion mit wesentlich geringerem Bauaufwand geschaffen wird, die mit einer verringerten Zugkraftunterbrechung schaltbar ist.

Gemäß der Erfindung wird diese Aufgabe gelöst, indem ein Verfahren Zum Schalten eines 6-Gang-Vorgelege-Wechselgetriebes für Kraftfahrzeuge der im Oberbegriff des Patentanspruches 1 erläuterten Art die im Kennzeichenteil des Patentanspruches 1 aufgezeigten Maßnahmen aufweist.

Dadurch, daß die Zahnradpaare für die verschiedenen Gänge in der für die automatisierte Handschaltversion erforderlichen Anordnung und geometrischen Auslegung mit einer Eingangswelle und den beiden parallelen Vorgelegewellen angeordnet werden und nur eine Einfachkupplung mit der Eingangswelle verbunden ist und während eines Gangwechsels (z.B. vom 1. Gang zum 2. Gang) bei noch eingerückter Einfachkupplung der 2. Gang durch Betätigen seiner Synchronisiereinrichtung vorsynchronisiert wird, darauffolgend die Einfachkupplung ausgerückt wird und bei ausgerückter Kupplung der 1. Gang ausgerückt und der 2. Gang vollständig eingerückt wird, worauf die Einfachkupplung wieder eingerückt wird, werden die Schwungmassen des Vorgelege-Wechselgetriebes zu einem teilweisen Ausgleich der Zugkraftunterbrechung herangezogen, wodurch sich in Verbindung mit der verkürzten Schaltzeit und der geringeren Zugkraftunterbrechung ein für den Fahrer sehr komfortabler Schaltvorgang ergibt.

Der Vollständigkeit halber weist die Anmelderin darauf hin, daß aus der DE 40 17 961 A1 im Zusammenhang mit einem hilfskraftbetätigt, zugkraftunterbrechungsfrei schaltbaren Doppelkupplungs-Vorgelege-Wechselgetriebe bereits der Vorschlag gemacht wird, für besondere Anfahrverhältnisse beide Kupplungen mit jeweils einer ihr zugeordneten Synchronisiereinheit gleichzeitig für eine gewisse Zeitspanne zu betätigen.

Aus der WO 89/10 282 A1 ist ein Antriebsstrang für ein Kraftfahrzeug bekannt, bei dem eine automatisch gesteuerte Kupplung mit einem hilfskraftbetätigt schaltbaren Wechselgetriebe zur Anwendung kommt, wobei in Abhängigkeit von der Betätigung der automatischen Kupplung Einfluß auf das Leistungsglied der Verbrennungskraftmaschine des Kraftfahrzeuges genommen wird.

Eine solche Einflußnahme wird auch bei der erfindungsgemäßen hilfskraftbetätigten, mit verringerter Zugkraftunterbrechung schaltbaren automatisierten Handschaltversion zweckmäßig sein.

Die Erfindung wird anhand der in den Figuren gezeigten unterschiedlichen Ausführungsversionen in Verbindung mit der erfindungsgemäßen Steuerung der Schalteinrichtungen näher erläutert. Es zeigt:
- Fig. 1: ein Getriebekonzept für ein 6-Gang-Vorgelege-Wechselgetriebe für Kraftfahrzeuge in der Anordnung der Gänge für eine manuell betätigbare Handschaltversion;
- Fig. 2: zeigt ein Getriebekonzept für ein 6-Gang-Vorgelege-Wechselgetriebe für Kraftfahrzeuge in der Anordnung mit einer doppelten Eingangswelle und einer Doppel-Eingangskupplung und einer Anordnung der Gänge, wie sie für eine Lastschaltversion erforderlich ist;
- Fig. 3: zeigt eine automatisierte Handschaltversion eines 6-Gang-Vorgelege-Wechselgetriebes für Kraftfahrzeuge in einer Anordnung mit nur einer Eingangswelle und einer Eingangskupplung und einer Anordnung der Gangräder in der gleichen Form, wie sie für ein zugkraftunterbrechungsfrei schaltbares Lastschaltgetriebe erforderlich sind; und
- Fig. 4: zeigt ein Diagramm, in der der übertragene Drehmomentverlauf im Vergleich eines herkömmlichen automatisierten Handschaltgetriebes und des erfindungsgemäßen, mit verringerter Zugkraftunterbrechung arbeitenden automatisierten Handschaltgetriebes aufgezeigt ist.

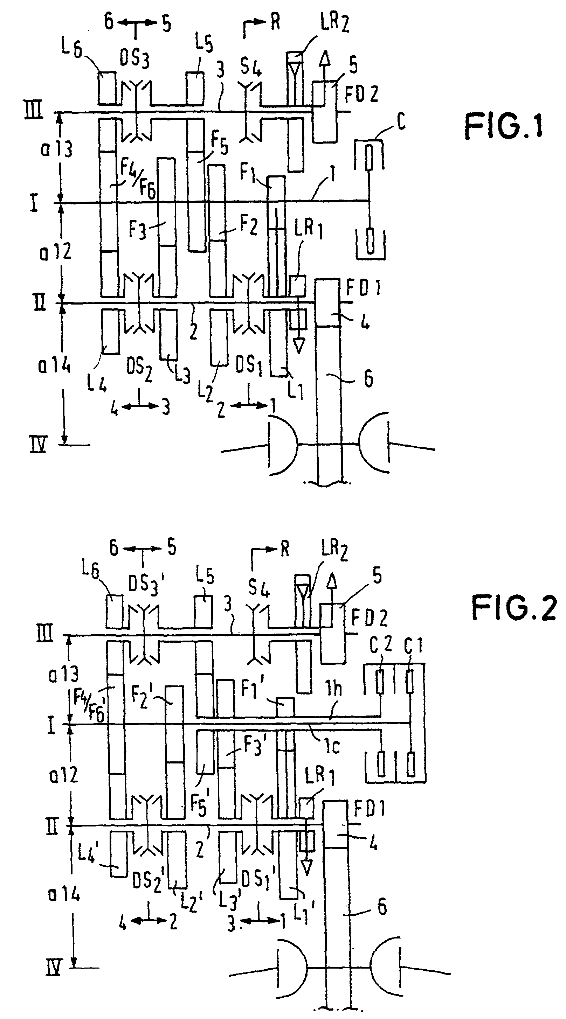

In Fig. 1 ist auf einer Wellenachse 1 eine einfache Eingangswelle 1 und eine einfache Eingangskupplung C angeordnet. Auf der Eingangswelle 1 sind im wesentlichen die Festräder F1, F2, F5, F3 und F4/F6 für die verschiedenen Zahnradpaare angeordnet.

Auf zur Wellenachse I parallelen Wellenachsen II und III sind Vorgelegewellen 2 und 3 angeordnet, die jeweils mit einem Ritzel 4 und 5 verbunden sind, die jeweils in Eingriff mit einem Endabtriebszahnrad 6 stehen, das um eine Wellenachse IV drehbar angeordnet ist, auf der auch das Ausgleichsdifferential und die Achsantriebswellen angeordnet sind.

Auf der Vorgelegewelle 2 sind die Losräder L1, L2, L3 und L4 und auf der Vorgelegewelle 3 sind die Losräder L5 und L6 angeordnet.

Zwischen jeweils zwei Losrädem sind Doppel-Synchronisiereinheiten S1, S2 und S3 angeordnet, über die in an sich bekannter Weise die lose laufenden Zahnräder treibend mit ihrer entsprechenden Getriebewelle verbindbar sind.

Auf der Vorgelegewelle 2 ist verbunden mit dem Losrad L1 des 1. Ganges noch ein Losrad LR1 für den Rückwärtsgang angeordnet, das in Eingriff mit einem auf der Vorgelegewelle 3 angeordneten Losrad LR2 steht, das über eine einfache Syhnchronisiereinheit S4 treibend mit der Vorgelegewelle 3 verbindbar ist.

Das in Zusammenhang mit Fig. 1 beschriebene Getriebekonzept für ein 6-Gang-Vorgelege-Wechselgetriebe für Kraftfahrzeuge entspricht einer Anordnung, die mit geringen Veränderungen in ein lastschaltbares Wechselgetriebe veränderbar ist, das in Zusammenhang mit Fig. 2 beschrieben wird.

In Fig. 2 ist wieder auf einer Wellenachse I eine Eingangswelle angeordnet, in diesem Fall ist diese Eingangswelle jedoch als doppelte Eingangswelle mit einer zentralen Eingangswelle 1c und einer hohlen Eingangswelle 1h ausgebildet, die jeweils mit einer entsprechenden Reibscheibe einer Doppel-Eingangskupplung C1 und C2 treibend verbunden sind.

Auf der einen hohlen Eingangswelle 1h sind hierbei die Festräder F1', F3' und F5' für die ungeraden Gänge angeordnet und auf der zentralen Eingangswelle 1c sind die Festräder F2' und F4'/F6' für die geraden Gänge angeordnet.

Auf der Vorgelegewelle 2 sind wieder die Losräder in einer geringen Umorientierung angeordnet und zwar derart, daß die Losräder L1' und L3' der Doppel-Synchronisiereinheit S1' zugeordnet sind, die Losräder L2' und L4' der Doppel-Synchronisiereinheit S2' zugeordnet sind.

Auf der Vorgelegewelle 3 sind die Losräder L5 und L6 im wesentlichen in unveränderter Lage der Doppel-Synchronisiereinheit F3' zugeordnet.

Auf der Vorgelegewelle 2 ist wieder das Losrad LR1 und auf der Vorgelegewelle 3 ist wieder das Losrad LR2 für den Rückwärtsgang angeordnet.

Wie dem Fachmann auf diesem Gebiet geläufig ist, kann bei einem solchen Getriebekonzept für ein 6-Gang-Wechselgetriebe eine Lastschaltversion dadurch geschaffen werden, daß jeweils die aufeinanderfolgenden Gänge auf unterschiedlichen Getriebezweigen angeordnet sind und durch einen Kupplungswechsel von der Doppel-Eingangskupplung zugkraftunterbrechungsfrei geschaltet werden.

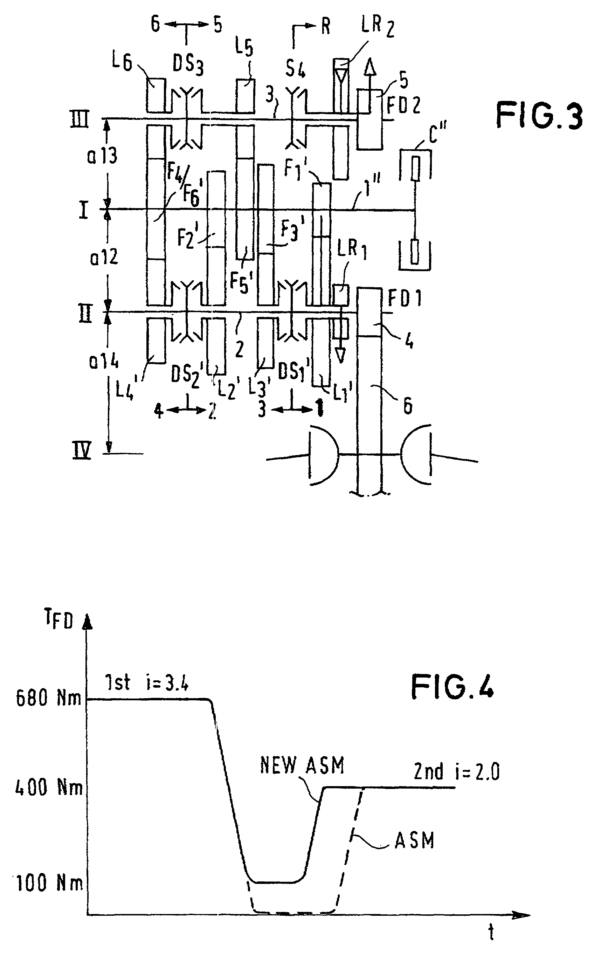

Das Wesentliche der vorliegenden Erfindung wird nun in Zusammenhang mit der Fig. 3 und der Fig. 4 erläutert.

In Fig. 3 ist wie in Fig. 1nur eine Eingangswelle 1" und eine einfache Eingangskupplung C2' vorgesehen.

Auf der einfachen Eingangswelle 1" sind jedoch die entsprechenden Festräder für die Gänge in der Weise angeordnet, wie sie auch für die zugkraftunterbrechungsfrei schaltbare Version gemäß Fig. 2 vorgesehen sind. Es sind also auf der einfachen Eingangswelle 1" das Festrad F1', das Festrad F3', das Festrad F5', das Festrad F2' und das Festrad F4'/F6' in dieser Aufeinanderfolge angeordnet.

Auf der Vorgelegewelle 2 sind wieder, wie in Fig. 2, die Losräder L1' und L3' der Doppel-Synchronisiereinheit S1 zugeordnet und die Losräder L2' und L4' sind der Doppel-Synchronisiereinheit S2' zugeordnet.

Auf der Vorgelegewelle 3 sind die Losräder L5 und L6 wieder der Doppel-Synchronisiereinheit S3 zugeordnet.

Die entsprechenden Losräder LR1 und LR2 sind unverändert angeordnet und LR2 ist der einfachen Synchronisiereinheit S4 zugeordnet.

Gemäß der Erfindung soll nun ein derartiges Getriebekonzept, das bis auf den Wegfall der Doppel-Eingangswelle und der Doppel-Eingangskupplung dem Getriebekonzept in Fig. 2 entspricht, eine Getriebeversion geschaffen werden, die hilfskraftbetätigt mit einer verringerten Zugkraftunterbrechung automatisch schaltbar ist.

Dies wird aus einer in Zusammenhang mit Fig. 4 ersichtlichen Schaltsequenz erreicht, die nachfolgend erläutert wird.

Fig. 4 zeigt ein Diagramm des Drehmomentverlaufes über die Zeit während einer Schaltung vom 1. Gang zum 2. Gang. Die in gestrichelten Linien dargestellte Kurve des Drehmomentverlaufes, die mit ASM (Automatic Shift Manual) bezeichnet ist, fällt hierbei während einer Schaltung vom 1. Gang zum 2. Gang bis auf 0 ab, um danach wieder auf die den 2. Gang entsprechende Höhe anzusteigen.

Gemäß der Schaltsequenz nach der vorliegenden Erfindung erfolgt ein Vorsynchronisieren des 2. Ganges bei noch eingerückter Einfachkupplung, wodurch sich die in vollen Linien und mit new ASM bezeichnete Linie ergibt, aus der ersichtlich wird, daß nicht nur der Drehmomenteinbruch während einer Schaltung vom 1. Gang zum 2. Gang verringert wird, sondern daß auch die Zeitspanne über die dieser Drehmomenteinbruch vorliegt, wesentlich verkürzt wird.

Damit wird eine automatisierte Handschaltversion eines Vorgelege-Wechselgetriebes für Kraftfahrzeuge mit gegenüber dem Aufwand von Doppel-Eingangswellen und Doppel-Eingangskupplungen wesentlich verringerten Bauaufwand ermöglicht, die eine für den Fahrer wesentlich komfortabler erfahrbare Schaltvorgänge bereitstellt.

Selbstverständlich muß diese Schaltsequenz bei der Betätigung der automatisch betätigten Eingangskupplung der hilfskraftbetätigten Schaltungen und der Motorsteuerung in einer entsprechend aufeinanderfolgenden Abstimmung erfolgen, die jedoch dem Fachmann auf diesem Gebiet keinerlei Schwierigkeiten bereiten wird.

## Patentansprüche

1. Verfahren zum Schalten eines 6-Gang-Vorgelege-Wechselgetriebes für Kraftfahrzeuge,
- wobei das Getriebe eine mit einer einfachen Eingangskupplung (C") verbundene Eingangswelle (1") und zumindest zwei parallel hierzu angeordnete Vorgelegewellen (2 und 3) aufweist, welche jeweils ein Ritzel (4 und 5) tragen, das in Eingriff mit einem Endabtriebszahnrad (6) steht, wobei auf der Eingangswelle (1") Festräder (F1' bis F6') angeordnet sind, die in ständigem Eingriff mit Losrädern (L1' bis L6') auf den Vorgelegewellen (2 und 3) stehen, wobei auf den Vorgelegewellen den Losrädem benachbart doppelte erste, zweite und dritte Synchronisiereinheiten (DS1' und DS2' und DS3') angeordnet sind, über die die mit den Festrädem der Eingangswelle kämmenden Losräder selektiv mit ihren zugehörigen Vorgelegewellen (2 und 3) treibend verbindbar sind, und
- wobei auf der Eingangswelle (1") die Festräder (F1'-F6') und auf der einen Vorgelegewelle (2) die Losräder in einer Aufeinanderfolge derart angeordnet sind,
- daß der ersten Synchronisiereinheit (DS1') die benachbarten Losräder (L1' und L3') für den ersten und den dritten Gang des Getriebes zugeordnet sind, und
- daß der zweiten Synchronisiereinheit (DS2') die benachbarten Losräder (L2' und L4') für den zweiten und vierten Gang des Getriebes zugeordnet sind,
**dadurch gekennzeichnet,daß**
bei einem Gangwechsel vom ersten zum zweiten Gang bzw. vom zweiten zum dritten Gang bzw. vom dritten zum vierten Gang bzw. vom vierten zum fünften Gang der Schaltablauf wie folgt ist:
- zunächst bleiben die Eingangskupplung (C") und die zugehörige erste oder zweite Synchronisiereinrichtung (DS1' oder DS2') für diesen Gang eingerückt, und durch Betätigen der zweiten oder ersten oder dritten Synchronisiereinrichtung (DS2' oder DS1' oder DS3') wird der nächsthöhere Gang vorsynchronisiert, und
- darauffolgend wird die Eingangskupplung (C") ausgerückt und die zugehörige erste oder zweite Synchronisiereinrichtung (DS1' oder DS2') von dem Losrad für diesen Gang getrennt,
- anschließend wird die zweite oder erste oder dritte Synchronisiereinrichtung (DS2' oder DS1' oder DS3') mit dem Losrad für den zugehörigen nächsthöheren Gang vollständig verbunden, und
- daraufhin wird die Eingangskupplung (C") geschlossen.

## Claims

1. Method of shifting a 6-speed countershaft transmission for motor vehicles,
- wherein the transmission has an input shaft (1'') connected with a single input clutch (C'') and at least two countershafts (2 and 3) arranged parallel thereto, which each carry a pinion (4 and 5), which is in engagement with an end output gearwheel (6), wherein on the input shaft (1'') fixed wheels (F1' to F6') are arranged, which are in constant engagement with loose wheels (L1' to L6') on the countershafts (2 and 3), wherein on the countershafts neighbouring the loose wheels double first, second and third synchronisation devices (DS1', DS2' and DS3') are arranged, by means of which the loose wheels intermeshing with the fixed wheels of the input shaft can be connected in a driving way selectively with their associated countershafts (2 and 3), and
- wherein on the input shaft (1'') the fixed wheels (F1'-F6') and on one countershaft (2) the loose wheels are arranged in such a sequence that
- the first synchronisation device (DS1') is associated with the neighbouring loose wheels (L1' and L3') for the first and the third gear of the transmission, and
- the second synchronisation device (DS2') is associated with the neighbouring loose wheels (L2' and L4') for the second and fourth gear of the transmission,
**characterised in that**
with a gear change from first into second gear or from second into third gear or from third into fourth gear or from fourth into fifth gear the shift sequence is as follows:
- firstly the input clutch (C'') and the associated first or second synchronisation device (DS1' or DS2') for this gear remain engaged, and through activation of the second or first or third synchronisation device (DS2' or DS1' or DS3') the next highest gear is pre-synchronised, and
- subsequently the input clutch (C'') is disengaged and the associated first or second synchronisation device (DS1' or DS2') is separated from the loose wheel for this gear,
- subsequently the second or first or third synchronisation device (DS2' or DS1' or DS3') is fully connected to the loose wheel for the associated next highest gear and
- subsequently the input clutch (C'') is closed.

## Revendications

1. Procédé pour commander une boîte de vitesses à transmission intermédiaire et à 6 rapports pour véhicules à moteur,
- sachant que la boîte de vitesses présente un arbre d'entrée (1") relié à un embrayage d'entrée simple (C") et au moins deux arbres intermédiaires (2 et 3) disposés parallèlement à celui-ci, qui portent chacun un pignon (4 et 5) engrenant avec une roue dentée d'extrémité menée (6), sachant que, sur l'arbre d'entrée (1"), sont disposées des roues fixes (F1' à F6') qui sont en prise permanente avec des roues libres (L1' à L6') situées sur les arbres intermédiaires (2 et 3), sachant que des première, deuxième et troisième unités de synchronisation doubles (DS1' et DS2' et DS3') sont placées sur les arbres intermédiaires au voisinage des roues libres, par le biais desquelles les roues libres engrenant avec les roues fixes de l'arbre d'entrée peuvent être reliées de façon sélective aux arbres intermédiaires (2 et 3) qui leur sont associés, de façon à réaliser une liaison d'entraînement, et
- sachant que les roues fixes (F1' - F6') sur l'arbre d'entrée (1") et les roues libres sur l'un des arbres intermédiaires (2) sont disposées selon un ordre de succession tel que
- les roues libres voisines (L1' et L3') pour le premier et le troisième rapport de la boîte de vitesses sont associées à la première unité de synchronisation (DS1'),
- et les roues libres voisines (L2' et L4') pour le deuxième et le quatrième rapport de la boîte de vitesses sont associées à la deuxième unité de synchronisation (DS2'),
**caractérisé en ce que**
le passage du premier au deuxième rapport ou du deuxième au troisième rapport ou du troisième au quatrième rapport ou du quatrième au cinquième rapport se déroule de la façon suivante :
- tout d'abord, l'embrayage d'entrée (C") et le premier ou le deuxième dispositif de synchronisation associé (DS1' ou DS2') à ce rapport restent solidaires, et le rapport suivant est présynchronisé en actionnant le deuxième ou le premier ou le troisième dispositif de synchronisation (DS2' ou DS1' ou DS3'),
- puis l'embrayage d'entrée (C") est débrayé et le premier ou le deuxième dispositif de synchronisation (DS1' ou DS2') associé est désolidarisé de la roue libre associée à ce rapport,
- puis le deuxième ou le premier ou le troisième dispositif de synchronisation (DS2' ou DS1' ou DS3') est complètement relié à la roue libre associée au rapport suivant,
- après quoi l'embrayage d'entrée (C") est débrayé.
